Europäisches Patentamt

**European Patent Office**

**Office européen des brevets**

(11) Veröffentlichungsnummer: **0 036 504**
**A2**

(12) ## EUROPÄISCHE PATENTANMELDUNG

(21) Anmeldenummer: **81101394.5**

(51) Int. Cl.³: **G 01 B 3/00**

(22) Anmeldetag: **26.02.81**

(30) Priorität: **05.03.80 DE 3008384**

(71) Anmelder: **Dr. Johannes Heidenhain GmbH, Nansenstrasse 17, D-8225 Traunreut (DE)**

(43) Veröffentlichungstag der Anmeldung: **30.09.81**
**Patentblatt 81/39**

(84) Benannte Vertragsstaaten: **AT CH FR GB IT LI NL SE**

(72) Erfinder: **Ernst, Alfons, Dipl.-Ing., Traunring 62, D-8225 Traunreut (DE)**

(54) **Messeinrichtung.**

(57) Bei dieser Meßeinrichtung ist als Maßverkörperung ein biegesteifer Maßstab (2) vorgesehen, der an seiner Oberfläche die Meßteilung (3) trägt. Der Maßstab (2) ist mit Hilfe von klammerartigen Spannfedern (5) am Maßstab-trägerkörper (1) befestigt. Die Spannfedern (5) werden mit Schrauben (6) am Trägerkörper (1) befestigt, und ihre federnden Zungen greifen in an der Längsseite verlaufenden Nuten (4) am Maßstab (2) an.

EP 0 036 504 A2

- 1 -

DR. JOHANNES HEIDENHAIN GmbH      23. Februar 1981

Meßeinrichtung
===============

Die Erfindung bezieht sich auf Meßeinrichtungen nach dem Oberbegriff des Anspruches 1.

Derartige Meßeinrichtungen sind beispielsweise aus der US-PS 3 816 003 bekannt. Der biegesteife Maßstab ist dabei in einer Nut angeordnet und wird durch Andruckschrauben fixiert. Durch die Schraubbefestigung treten dabei geringfügige Verbiegungen des Maßstabes auf, die durch Unebenheiten oder Verschmutzungen der Montageflächen hervorgerufen werden. Ist dabei die Meßteilung nicht in der neutralen Faser angeordnet, können die Verbiegungen zu Meßfehlern führen.

Es ist die Aufgabe der Erfindung, eine Maßstabbefestigungseinrichtung zu finden, bei der diese Nachteile nicht auftreten und die die Meßfehler reduziert.

- 2 -

Erfindungsgemäß wird diese Aufgabe durch die im Kennzeichen des Anspruches 1 angegebenen Merkmale gelöst.

Weitere vorteilhafte Einzelheiten sind durch die Unteransprüche angegeben.

Die Vorteile der Erfindung sind beispielsweise geringe Biegebelastungen des Maßstabkörpers durch genau dosierte Andruckkräfte, ausreichende Befestigung des Maßstabkörpers, Unempfindlichkeit gegenüber unebenen Montageflächen und resultierend aus der Summe dieser Vorteile eine erhöhte Meßgenauigkeit der Meßeinrichtung.

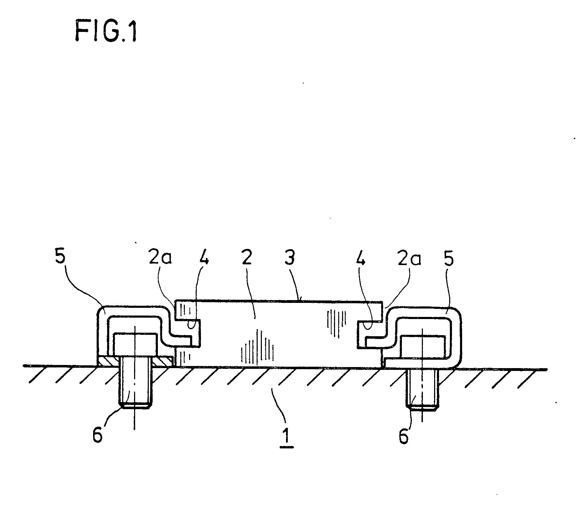

In der Zeichnung soll anhand eines Ausführungsbeispiels die Erfindung noch näher erläutert werden.

An einem Trägerkörper 1, der von einem Schlitten oder Bett einer Werkzeug- oder Meßmaschine gebildet werden kann, ist ein biegesteifer Maßstabkörper 2 angeordnet. Der Maßstabkörper 2 trägt auf seiner dem Trägerkörper 1 abgewandten Oberfläche eine Meßteilung 3, die symmetrisch zur Längsachse des Maßstabkörpers 2 unmittelbar auf diesem aufgebracht ist. Die Längsseiten 2a des Maßstabkörpers 2 weisen nutartige Ausnehmungen 4 auf, in denen klammerartige Spannfedern 5 angreifen. Die Spannfedern 5 sind mit Schrauben 6 am Trägerkörper 1 befestigt. Die Kraft der Spannfedern 5 ist groß genug, um den Maßstabkörper 2 auf dem Maschinenteil 1 festzuhalten, aber zu klein, um kurzwellige Verbiegungen des Maßstabkörpers 2 zu verursachen. Durch die Gestaltung der Spannfedern 5 läßt sich die Andruckkraft, die auf den Maßstabkörper 2 einwirkt, genau festlegen. Eine Befestigung mit unnachgiebigen
Halteelementen wie beim Stand der Technik hat
kurzwellige Verbiegungen des Maßstabkörpers zur
Folge, da die Montageflächen in der Praxis nicht
so eben gefertigt werden, daß eine absolut plane
Auflage des Maßstabkörpers gewährleistet ist. Für
die Erhöhung der Meßgenauigkeit einer derartigen
Meßeinrichtung ist es jedoch erforderlich, die tatsächliche Biegelinie eines durch Montage gekrümmten
Maßstabkörpers möglichst frei von kleinen Biegeradien zu halten.

Fehler, die durch seitliche Verbiegung des Maßstabkörpers 2 entstehen könnten, werden durch die symmetrische Lage der Meßteilung 3 zur Längsachse des
Maßstabkörpers vermieden. Durch entsprechende Gestaltung ist die Biegesteifigkeit des Maßstabkörpers 2 in seitlicher Richtung etwa zehnmal größer
als um die Querachse, dementsprechend ist die
Empfindlichkeit gegen Verbiegung kleiner.

Die Meßeinrichtung kann rein optisch, oder aber
auch lichtelektrisch betrieben werden.

0036504

- 4 -

Patentansprüche
===============

1.) Meßeinrichtung mit einem biegesteifen Maßstab und Befestigungselementen für diesen Maßstab, dadurch gekennzeichnet, daß als Befestigungselemente für den Maßstabkörper (2) federnde Spannelemente (5) vorgesehen sind.

2.) Meßeinrichtung nach Anspruch 1, dadurch gekennzeichnet, daß als Befestigungselemente für den Maßstabkörper (2) klammerartige Spannfedern (5) vorgesehen sind.

3.) Meßeinrichtung nach Anspruch 1, dadurch gekennzeichnet, daß als Befestigungselemente für den Maßstabkörper (2) federbelastete Kipphebel vorgesehen sind.

4.) Meßeinrichtung nach Anspruch 1, dadurch gekennzeichnet, daß der biegesteife Maßstabkörper (2) an seinen Längsseiten (2a) Ausnehmungen (4) aufweist, und daß die am Maßstabträger (1) befestigten federnden Spannelemente (5) in den Ausnehmungen (4) angreifen.

5.) Meßeinrichtung nach Anspruch 1, dadurch gekennzeichnet, daß der Maßstab (2) nur aus einem biegesteifen metallischen Körper besteht, an dessen oberer Fläche direkt die Meßteilung (3) symmetrisch zur Längsachse aufgebracht ist.

FIG.1